# FASCICULE DE BREVET EUROPEEN

(11) **EP 3 642 050 B1**
(45) Date de publication et mention de la délivrance du brevet: **19.05.2021**
(21) Numéro de dépôt: 18755505.7
(22) Date de dépôt: 21.06.2018
(51) Int. Cl.: B60C 1/00, C08L 9/06, C08F 2/22

(54) **PNEUMATIQUE POUR VEHICULE PORTANT DES LOURDES CHARGES COMPRENANT UNE NOUVELLE BANDE DE ROULEMENT**
LUFTREIFEN MIT NEUER LAUFFLÄCHE FÜR EIN SCHWERLASTFAHRZEUG
PNEUMATIC TYRE FOR A VEHICLE CARRYING HEAVY LOADS, COMPRISING A NEW TREAD

(30) Priorité: 22.06.2017 FR 1755700
(43) Date de publication de la demande: 29.04.2020
(73) Titulaire: Compagnie Générale des Etablissements Michelin, 63000 Clermont-Ferrand (FR)
(72) Inventeur: FLEURY, Etienne, 63040 Clermont-Ferrand Cedex 9 (FR)
(74) Mandataire: Bocchi, Brigitte
(86) Numéro de dépôt international: PCT/FR2018/051497
(87) Numéro de publication internationale: WO 2018/234701

(56) Documents cités:
- WO-A1-02/072688
- FR-A1- 2 866 028
- FR-A1- 2 974 808

## Description

Le domaine de la présente invention est celui des pneumatiques pour les véhicules portant de lourdes charges, en particulier les véhicules poids-lourds, les bus, les véhicules de génie civil, etc.

Les pneumatiques destinés aux véhicules portant de lourdes charges comportent des caractéristiques propres de dimensions, de robustesse, d'architecture qui les distinguent des autres pneumatiques, notamment des pneumatiques pour équiper des véhicules de tourisme. Par exemple, ces pneumatiques sont pourvus de bandes de roulement qui présentent, par rapport aux épaisseurs des bandes de roulement des pneumatiques pour véhicules légers, en particulier pour véhicules de tourisme ou camionnette, de grandes épaisseurs de matériaux caoutchoutiques. Typiquement, la partie usante de la bande de roulement d'un pneumatique destinés à équiper des véhicules poids lourds a une épaisseur d'au moins 15 mm, celle d'un pneumatique pour véhicule génie civil d'au moins 30 mm, voir jusqu'à 120 mm.

Au cours du roulage, une bande de roulement subit des sollicitations mécaniques et des agressions résultant du contact direct avec le sol. Dans le cas d'un pneumatique monté sur un véhicule portant de lourdes charges, les sollicitations mécaniques et les agressions subies par ce pneumatique se trouvent amplifiées sous l'effet du poids porté par le pneumatique et peuvent provoquer des arrachements de matière de la bande de roulement. Il est donc nécessaire que les bandes de roulement des pneumatiques de ces véhicules présentent une bonne résistance aux agressions.

D'autre part, certains véhicules portant des lourdes charges sont également destinés à rouler sur des trajets de plus en plus longs, du fait de l'amélioration du réseau routier et de la croissance du réseau autoroutier dans le monde. L'usure de la bande de roulement de ces pneumatiques doit donc être la plus réduite possible pour une distance de parcours donnée et les pertes d'énergie liées au roulement des pneumatiques doivent également être réduites le plus possible. Il est donc nécessaire, en outre d'une bonne résistance à l'usure et d'une bonne résistance aux agressions, de rechercher également une bonne résistance au roulement.

Les manufacturiers de pneumatique cherchent donc en permanence un bon compromis entre ces trois performances.

Or, il est bien connu de l'homme de l'art que l'amélioration d'une performance pour des pneumatiques est souvent obtenue au détriment des autres performances.

A titre d'exemple, il est connu, pour améliorer la résistance à l'usure des pneumatiques équipant des véhicules porteurs de lourdes charges, d'augmenter la rigidité à cuit de leur bande de roulement en augmentant le taux de charge renforçante, notamment le noir de carbone, et/ou en utilisant un fort taux d'élastomères synthétiques dans les compositions de caoutchouc constitutives de ces bandes de roulement. Les compositions qui en résultent confèrent aux bandes de roulement correspondantes des résultats satisfaisants pour ce qui est de la rigidité, et donc de la résistance à l'usure. Cependant, ces compositions présentent alors généralement des pertes hystérétiques élevées et donc une forte résistance au roulement.

Il existe donc un besoin permanent de fournir un pneumatique destiné à équiper les véhicules portant de lourdes charges ayant une bande de roulement dont la résistance aux agressions est élevée sans que soient pénalisées la résistance au roulement et la résistance à l'usure.

Au vu de ce qui précède, il est un objectif de fournir un pneumatique destiné à équiper un véhicule portant de lourdes charges, ce pneumatique comportant une bande de roulement qui satisfasse un compromis de performances résistance aux agressions/résistance au roulement/résistance à l'usure.

Les Demanderesses ont découvert lors de leur recherches que la combinaison spécifique d'un copolymère styrène-butadiène en émulsion ayant une certaine microstructure, d'une charge renforçante comprenant à titre majoritaire de la silice et d'un système plastifiant à un taux spécifique permet d'obtenir une composition de caoutchouc utilisable dans une bande de roulement pour pneumatique pour les véhicules portant de lourdes charges répondant à cette problématique.

Ainsi, l'invention concerne un pneumatique destiné à équiper un véhicule portant de lourdes charges dont la bande de roulement comprend une composition de caoutchouc à base d'au moins:
- une matrice élastomère comprenant à titre majoritaire un copolymère styrène-butadiène en émulsion, ledit copolymère ayant un taux d'unités butadiéniques supérieur ou égal à 50 % en poids par rapport au poids total dudit copolymère, de préférence dans un domaine allant de 55 à 80 % en poids par rapport au poids total dudit copolymère,
- une charge renforçante comprenant à titre majoritaire de la silice,
- un système de réticulation chimique,
- un agent de couplage de la silice avec la matrice élastomère, et
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition est compris dans un domaine allant de 2 à 17 pce, de préférence de 2 à 12 pce.

Selon un mode de réalisation préféré, le copolymère styrène-butadiène en émulsion présente un taux d'unités styréniques inférieur ou égal à 50% en poids par rapport au poids total dudit copolymère, de préférence compris dans un domaine allant de 20 à 45% en poids par rapport au poids total dudit copolymère.

Selon un mode de réalisation préféré, le copolymère styrène-butadiène en émulsion présente un taux d'unités butadiènyl 1,4-trans supérieur ou égal à 50 % en poids par rapport au poids total des unités butadiéniques.

Selon un mode de réalisation préféré, le copolymère styrène-butadiène en émulsion présente un taux d'unités butadiènyl 1,4-cis inférieur ou égal à 25 % en poids par rapport au poids total des unités butadiéniques.

Selon un mode de réalisation préféré, le copolymère styrène-butadiène en émulsion présente un taux d'unités butadiènyl 1,2-vinyl inférieur ou égal à 25 % en poids par rapport au poids total des unités butadiéniques.

Selon un mode de réalisation préféré, le copolymère styrène-butadiène en émulsion présente un taux d'unités butadiènyl 1,4-trans supérieur ou égal à 60 % en poids par rapport au poids total des unités butadiéniques.

Selon un mode de réalisation préféré, le copolymère styrène-butadiène en émulsion présente un taux d'unités butadiènyl 1,4-cis inférieur ou égal à 20 % en poids par rapport au poids total des unités butadiéniques.

Selon un mode de réalisation préféré, le copolymère styrène-butadiène en émulsion présente un taux d'unités butadiènyl 1,2-vinyl inférieur ou égal à 20 % en poids par rapport au poids total des unités butadiéniques.

Selon un mode de réalisation préféré, le copolymère styrène-butadiène en émulsion présente un taux d'unités butadiènyl 1,4-trans compris dans un domaine allant de 60 à 80 % en poids par rapport au poids total des unités butadiéniques.

Selon un mode de réalisation préféré, le copolymère styrène-butadiène en émulsion présente un taux d'unités butadiènyl 1,4-cis compris dans un domaine allant de 10 à 20 % en poids par rapport au poids total des unités butadiéniques.

Selon un mode de réalisation préféré, le copolymère styrène-butadiène en émulsion présente un taux d'unités butadiènyl 1,2-vinyl compris dans un domaine allant de 10 à 20 % en poids par rapport au poids total des unités butadiéniques.

Selon un mode de réalisation préféré, le copolymère styrène-butadiène a une température de transition vitreuse comprise dans un domaine allant de -65°C et -30°C.

Selon un mode de réalisation préféré, le copolymère styrène-butadiène en émulsion est un copolymère styrène-butadiène en émulsion non-étendu à l'huile.

Selon un mode de réalisation préféré, le copolymère styrène-butadiène en émulsion est un copolymère styrène-butadiène en émulsion non-fonctionnalisé.

Selon un mode de réalisation préféré, la matrice élastomère comprend en outre au moins un deuxième élastomère diénique différent du copolymère styrène-butadiène.

Selon un mode de réalisation préféré, le deuxième élastomère diénique est choisi dans le groupe formé par les polybutadiènes, le caoutchouc naturel, les isoprènes de synthèse, les copolymères butadiènes autre que les copolymères styrène-butadiène, les copolymères d'isoprènes et les mélanges de ces polymères et copolymères.

Selon un mode de réalisation préféré, le deuxième élastomère diénique est un polybutadiène.

Selon un mode de réalisation préféré, le taux du deuxième élastomère diénique est compris dans un domaine allant de 5 à 49 pce, de préférence de 15 à 35 pce.

Selon un mode de réalisation préféré, la composition comprend en outre du noir de carbone.

Selon un mode de réalisation préféré, le taux de noir de carbone est inférieur ou égal à 10 pce, inférieur ou égal à 5 pce, de préférence le taux de noir de carbone est compris dans un domaine allant de 0,5 à 4 pce.

Selon un mode de réalisation préféré, le taux de la charge renforçante est compris dans un domaine allant de 55 à 200 pce, de préférence de 55 à 150 pce, de manière plus préférée de 55 à 80 pce.

Selon un mode de réalisation préféré, la résine plastifiante a une température de transition vitreuse Tg supérieure ou égale à 30°C, de préférence comprise dans un domaine allant de à 30 à 100°C.

Selon un mode de réalisation préféré, la résine plastifiante est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les mélanges de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Selon un mode de réalisation préféré, le système plastifiant comprend de 0 à 2 pce d'au moins un agent plastifiant liquide à température ambiante.

Selon un mode de réalisation préféré, la composition est exempte d'agent plastifiant liquide à température ambiante.

Selon un mode de réalisation préféré, le pneumatique est destiné à équiper un véhicule poids-lourd.

L'invention ainsi que ses avantages seront aisément compris à la lumière de la description, des figures et des exemples de réalisation.

### 1 - METHODE DE MESURE UTILISEES.

Les différentes méthodes de mesure utilisées dans la présente description et les exemples sont présentées ci-dessous.

### 1.1 Propriétés dynamiques

Les propriétés dynamiques et notamment tan(δ)ₘₐₓ, représentative de l'hystérèse, sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10 Hz, à 60°C. On effectue un balayage en amplitude de déformation crête à crête de 0,1 à 100 % (cycle aller) puis de 100 à 0,1 % (cycle retour). Le résultat exploité est le facteur de perte (tan(δ)). Pour le cycle retour, on considère la valeur maximale de tan(δ) observée (tan(δ)max à 60°C).

Les résultats sont indiqués en base 100 ; la valeur arbitraire 100 étant attribuée au témoin pour calculer et comparer ensuite tan(δ)ₘₐₓ à 60°C des différents échantillons testés. La valeur en base 100 pour l'échantillon à tester est calculée selon l'opération : (valeur de tan(δ)max à 60°C de l'échantillon à tester/valeur de tan(δ) max à 60°C du témoin) x 100). De cette façon, un résultat inférieur à 100 indique une diminution de l'hystérèse (donc une amélioration des propriétés hystérétiques) qui corrobore d'une amélioration de la performance de résistance au roulement.

Pour la mesure du module G* à 50% de déformation noté G*_{50%}, on effectue un balayage en amplitude de déformation de 0,1% à 100% crête-crête (cycle aller), puis de 100% à 0,1% crête-crête (cycle retour) à une température de 60°C. Le résultat exploité est le module complexe de cisaillement dynamique (G*). Pour le cycle aller, on indique la valeur maximale de G* à la déformation de 50 %.

Les résultats sont indiqués en base 100. La valeur arbitraire 100 étant attribuée au témoin pour calculer et comparer ensuite le module G* à 50% de déformation des différentes compositions testées. La valeur en base 100 pour la composition à tester est calculée selon l'opération : (valeur module G* à 50% de déformation à 60°C de la composition à tester / valeur de module G* à 50% de déformation à 60°C du témoin) x 100. De cette façon, un résultat supérieur à 100 indique une amélioration du module G* à 50% de déformation, qui corrobore d'une amélioration de la rigidité.

### 1.2 Essais de traction

Ces essais de traction permettent de déterminer les contraintes d'élasticité et les propriétés à la rupture. Sauf indication différente, ils sont basés sur la norme française NFT 46-002.

Les allongements à la rupture (en %) sont mesurés. Toutes ces mesures de traction sont effectuées à la température de 60°C ± 2°C, et dans les conditions normales d'hygrométrie (50 ± 5% d'humidité relative).

Les résultats seront indiqués en base 100. La valeur arbitraire 100 étant attribuée au témoin pour calculer et comparer ensuite l'allongement à la rupture des différentes compositions testées. Un résultat inférieur à 100 pour l'allongement à la rupture indiquera une diminution de la valeur concernée, et inversement, un résultat supérieur à 100, indiquera une augmentation de la valeur concernée.

### 1.3 Déchirabilité

Les indices de déchirabilité sont mesurés à 100°C. On détermine notamment la force à exercer pour obtenir la rupture (FRD, en Mpa (en N/mm)) et on mesure la déformation à rupture (DRD, en %) sur une éprouvette de dimensions 10 x 105 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie Rupture) qui est le produit de la contrainte à la rupture FRD et de déformation à la rupture DRD.

Les résultats sont indiqués en base 100. La valeur arbitraire 100 étant attribuée au témoin pour calculer et comparer ensuite l'énergie rupture des compositions à tester. Un résultat inférieur à 100 pour l'énergie rupture indique une diminution de la valeur concernée, et inversement, un résultat supérieur à 100, indique une augmentation de la valeur concernée.

### 1.4 Mesure de la température de transition vitreuse d'élastomère

Toutes les valeurs de température de transition vitreuse Tg sont mesurées de manière connue par DSC (Differential Scanning Calorimetry) selon la norme ASTM D3418 (1999). La température de transition vitreuse Tg peut être notée dans la suite de la description simplement par Tg.

### 1.5 Mesure de la surface spécifique BET et CTAB de la silice

La surface spécifique BET de la silice est déterminée par adsorption de gaz à l'aide de la méthode de Brunauer-Emmett-Teller décrite dans « The Journal of the American Chemical Society» (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2].

Les valeurs de surface spécifique CTAB (S_{CTAB}) ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la silice.

### 1.6 Microstructure des élastomères

La microstructure des élastomères est bien connue des fournisseurs d'élastomères et peut être déterminée par des techniques usuelles bien connues de l'homme du métier tel que par exemple l'analyse RMN (Résonance Magnétique Nucléaire) ou l'analyse IR (Infra Rouge).

En particulier, la spectroscopie proche infrarouge (NIR) est utilisée pour déterminer quantitativement le taux massique de styrène dans l'élastomère styrène-butadiène ainsi que sa microstructure (répartition relative des unités butadiéniques : butadiènyl 1,2-vinyl, butadiènyl 1,4-trans et butadiènyl 1,4-cis). Le principe de la méthode repose sur la loi de Beer-Lambert généralisée à un système multi-composants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### 2 - DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend « pce » (pce : partie pour cent d'élastomère usuellement « phr » en anglais) la partie en poids d'un constituant pour cent parties en poids d'élastomères (du total des élastomères si plusieurs élastomères sont présents)) ou caoutchouc présents dans la composition de caoutchouc.

Dans le cadre de l'invention, les produits carbonés mentionnés dans la description peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### 2.1 - Pneumatique

Un premier objet de la présente invention concerne un pneumatique destiné à équiper un véhicule portant de lourdes charges dont la bande de roulement comprend une composition de caoutchouc à base d'au moins:
- une matrice élastomère comprenant à titre majoritaire un copolymère styrène-butadiène en émulsion, ledit copolymère ayant un taux d'unités butadiéniques supérieur ou égal à 50 % en poids par rapport au poids total dudit copolymère, de préférence dans un domaine allant de 55 à 80 % en poids par rapport au poids total dudit copolymère,
- une charge renforçante comprenant à titre majoritaire de la silice,
- un système de réticulation chimique,
- un agent de couplage de la silice avec la matrice élastomère, et
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition est compris dans un domaine allant de 2 à 17 pce, de préférence de 2 à 12 pce

Par « pneumatique destiné à équiper un véhicule portant de lourdes charges » on entend de manière usuelle tout pneumatique destiné à équiper des véhicules poids-lourds, des bus, des véhicules de génie civil, des véhicules agricoles ou des avions. L'expression « lourdes charges » fait référence à la marchandise transportée dont le poids s'évalue en tonne.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation ou vulcanisation.

Par « matrice élastomère » ou « matrice élastomérique », on entend l'ensemble du ou des élastomère(s) présent(s) dans la composition de caoutchouc.

### 2.1.1 - Composition

### Elastomère copolymère styrène-butadiène en émulsion

La matrice élastomérique de la composition de caoutchouc de la bande de roulement du pneumatique conforme à l'invention comprend à titre majoritaire un copolymère styrène-butadiène en émulsion (ou un mélange de copolymères styrène-butadiène en émulsion), ledit copolymère ayant un taux d'unités butadiéniques supérieur ou égal à 50 % en poids par rapport au poids total dudit copolymère, de préférence dans un domaine allant de 55 à 80 % en poids par rapport au poids total dudit copolymère.

Par « copolymère styrène-butadiène en émulsion », on entend, au sens de la présente invention, un copolymère résultant de la copolymérisation de monomères styrène et de monomères butadiène disponibles sous forme d'émulsion (i.e. un copolymère styrène-butadiène préparé en émulsion (E-SBR)) ou à un copolymère styrène-butadiène préparé initialement par polymérisation en solution puis qui est émulsifié dans un mélange de solvant organique et d'eau, généralement au moyen d'un tensio-actif. Les copolymères styrène-butadiène en émulsion sont des copolymères diéniques statistiques, par opposition notamment à des copolymères du type thermoplastiques à blocs styrène et à blocs butadiène.

Le procédé de synthèse d'un copolymère styrène-butadiène en solution et le procédé d émulsification de ce copolymère dans un mélange de solvant organique et d'eau sont bien connus de l'homme du métier. Le solvant organique peut être tout solvant organique apolaire, c'est-à-dire tout solvant hydrocarboné inerte tel que un hydrocarbure aliphatique tel que le pentane, l'hexane, l'heptane, l'iso-octane, ou un hydrocarbure alicyclique tel que le cyclohexane, le méthyl-cyclohexane ou un hydrocarbure aromatique comme le benzène, le toluène, le xylène et les mélanges de ces hydrocarbures.

Il existe deux grands types de procédés de copolymérisation en émulsion du styrène et de butadiène, l'un d'entre eux, ou procédé à chaud (mis en œuvre à une température proche de 50°C), étant adapté pour la préparation de copolymères styrène-butadiène très ramifiés alors que l'autre, ou procédé à froid (mis en œuvre à une température pouvant être comprise dans un domaine allant de 15°C à 40°C), permet d'obtenir des copolymères styrène-butadiène plus linéaires. Ces deux procédés de synthèse peuvent être mis en œuvre pour obtenir les copolymères styrène-butadiène utilisables dans les compositions pour les pneumatiques de l'invention.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, I. M. Kolthoff, E. J. Meehan, University of Minesota, Minneapolis, Minesota qui ont paru dans Journal of Polymer Science de 1950, Vol. n°5, Issue 2, pp. 201-206, et Journal of Polymer Science de 1951, Vol. n°6, issue 1, pp. 73-81.

Concernant la mise en œuvre dudit procédé à froid, on pourra par exemple se reporter à l'article de E. J. Vandenberg et G. E. Hulse, publié dans Industrial and Engineering Chemistry, 1948, Vol. 40. N°5, pp. 932-937 Hercules Powder Compagny, Wilmington, Delaware et à l'article de R. Miller et H. E. Diem, publié dans Industrial and Engineering Chemistry, 1954, Vol. n°46, n°5, pp 1065-1073, J, B. F. Goodrich Chemical Co, Akron, Ohio.

Le copolymère styrène-butadiène en émulsion utilisable dans les compositions de la bande de roulement du pneumatique de l'invention peut être indifféremment linéaire ou ramifié.

Le copolymère styrène-butadiène en émulsion utilisable dans les compositions de la bande de roulement du pneumatique de l'invention possède un taux d'unités butadiéniques supérieur ou égal à 50 % en poids par rapport au poids total dudit copolymère. De préférence, ce copolymère possède un taux d'unités styréniques inférieur ou égal à 50 % en poids par rapport au poids total dudit copolymère.

Il est bien connu de l'homme du métier que le poids total du copolymère styrène-butadiène est la somme des unités styréniques en poids et des unités butadiéniques en poids.

Par « unités butadiéniques », on entend l'ensemble des unités polymérisées issues du monomère butadiène, c'est-à-dire les unités butadiènyl 1,4-cis, les unités butadiènyl 1,4-trans et les unités butadiènyl 1,2-vinyl.

Par « unités styréniques », on entend les unités polymérisées issues du monomère styrène.

De préférence, le copolymère styrène-butadiène en émulsion utilisable dans les compositions de la bande de roulement du pneumatique de l'invention possède un taux d'unités butadiéniques compris dans un domaine allant de 55 à 80 % en poids par rapport au poids total dudit copolymère.

De préférence, le copolymère styrène-butadiène en émulsion utilisable dans les compositions de la bande de roulement du pneumatique de l'invention possède un taux d'unités styréniques compris dans un domaine allant de 20 à 45 % en poids par rapport au poids total dudit copolymère.

De préférence, le copolymère styrène-butadiène en émulsion utilisable dans les compositions de la bande de roulement du pneumatique de l'invention présente un taux d'unités butadiènyl 1,4-trans supérieur ou égal à 50 % en poids par rapport au poids total des unités butadiéniques.

Il est bien connu de l'homme du métier que le poids total des unités butadiéniques dans un copolymère styrène-butadiène est la somme des unités butadiènyl 1,4-trans en poids, des unités butadiènyl 1,4-cis en poids et des unités butadiènyl 1,2-vinyl en poids.

De préférence, le copolymère styrène-butadiène en émulsion utilisable dans les compositions de la bande de roulement du pneumatique de l'invention présente un taux d'unités butadiènyl 1,4-cis inférieur ou égal à 25 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,2-vinyl inférieur ou égal à 25 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,4-trans supérieur ou égal à 60 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,4-cis inférieur ou égal à 20 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,2-vinyl inférieur ou égal à 20 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,4-trans compris dans un domaine allant de 60 à 80 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,4-cis compris dans un domaine allant de 10 à 20 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,2-vinyl compris dans un domaine allant de 10 à 20 % en poids par rapport au poids total des unités butadiéniques.

De préférence, le copolymère styrène-butadiène en émulsion utilisable dans les compositions de la bande de roulement du pneumatique de l'invention présente un taux d'unités butadiènyl 1,4-trans compris dans un domaine allant de 60 à 80 % en poids par rapport au poids total des unités butadiéniques, un taux d'unités butadiènyl 1,4-cis compris dans un domaine allant de 10 à 20 % en poids par rapport au poids total des unités butadiéniques et un taux d'unité butadiènyl 1,2-vinyl compris dans un domaine allant de 10 à 20 % en poids par rapport au poids total des unités butadiéniques.

De préférence, le copolymère styrène-butadiène en émulsion utilisable dans les compositions de la bande de roulement du pneumatique de l'invention a une température de transition vitreuse comprise dans un domaine allant de -65°C et -30°C. L'homme du métier sait comment modifier la microstructure d'un copolymère styrène-butadiène en émulsion pour augmenter ou ajuster sa température de transition vitreuse Tg, notamment en jouant sur les teneurs en unités styréniques ou par exemple sur les teneurs en unités butadiényl 1,2-vinyl.

La microstructure et la température de transition vitreuse Tg sont notamment déterminées selon les méthodes de mesures décrites ci-dessus.

De préférence, le copolymère styrène-butadiène en émulsion utilisable dans les compositions de la bande de roulement du pneumatique de l'invention est un copolymère styrène-butadiène en émulsion non-fonctionnalisé. Par «copolymère non-fonctionnalisé », on entend un copolymère qui ne comporte pas de groupement chimique ayant un ou plusieurs hétéroatomes tels que un atome de soufre, un atome d'azote, un atome d'oxygène, un atome de silicium. Autrement dit, le copolymère styrène-butadiène en émulsion non-fonctionnalisé est un copolymère constitué d'atomes de carbone et d'atomes d'hydrogène.

De préférence, le copolymère styrène-butadiène utilisable dans les compositions de la bande de roulement du pneumatique de l'invention est un copolymère styrène-butadiène en émulsion non-étendu à l'huile. Par « copolymère étendu à l'huile », on entend un copolymère qui comprend une huile d'extension, notamment une huile d'extension de type paraffinique, naphténique ou aromatique. Cette huile d'extension est ajoutée après la fin du procédé de polymérisation dudit copolymère et est mélangée audit copolymère. Les copolymères étendus à l'huile sont bien connus de l'homme du métier. Par conséquent un copolymère styrène-butadiène non-étendu à l'huile est un copolymère styrène-butadiène qui ne comprend pas d'huile d'extension.

De préférence, le copolymère styrène-butadiène utilisable dans les compositions de la bande de roulement du pneumatique de l'invention est un copolymère styrène-butadiène en émulsion non-fonctionnalisé et non-étendu à l'huile.

### Autre élastomère diénique

Le copolymère styrène-butadiène en émulsion (ou le mélange de copolymères styrène-butadiène en émulsion) peut avantageusement être utilisé en coupage (mélange) avec un ou plusieurs autre(s) élastomère(s) diénique(s) différent(s) d'un copolymère styrène-butadiène. Dans le cas d'un coupage, il est notamment entendu que la somme des différents élastomères utilisés dans la matrice élastomérique est égale à 100 pce.

Ainsi, dans un mode de réalisation du pneumatique conforme à l'invention, au copolymère styrène-butadiène en émulsion décrit ci-dessus (y compris à ses variantes préférées), peut être associé éventuellement au moins un deuxième élastomère diénique, différent d'un copolymère styrène-butadiène. Autrement dit le deuxième élastomère ne peut pas être un copolymère de styrène-butadiène, notamment un copolymère de styrène-butadiène en émulsion ou en solution.

Par « élastomère (ou indistinctement « caoutchouc » ; les deux termes étant considérés comme synonymes) du type diénique », qu'il soit naturel ou synthétique, doit être compris de manière connue un élastomère (on entend un ou plusieurs élastomères) constitué au moins en partie (i.e., un homopolymère ou un copolymère) d'unités monomères diènes (monomères porteurs de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % (% en moles)). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50% (% en mole).

Ces définitions étant données, on entend plus particulièrement par élastomère diénique susceptible d'être utilisé dans les compositions conformes à l'invention:
(a) tout homopolymère d'un monomère diène conjugué, notamment tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Dans le cas des copolymères du type (b), ceux-ci contiennent de 20 à 99% en poids d'unités diéniques et de 1 à 80% en poids d'unités vinylaromatiques.

A titre de diènes conjugués conviennent notamment le butadiène-1,3, le 2-méthyl-1,3-butadiène (isoprène), les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatique conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Préférentiellement, le deuxième élastomère diénique est choisi dans le groupe constitué par les polybutadiène (en abrégé « BR »), les polyisoprènes de synthèse (en abrégé « IR »), le caoutchouc naturel (en abrégé « NR »), les copolymères de butadiène différent des copolymères styrène-butadiène, les copolymères d'isoprène et les mélanges de ces élastomères. De tels copolymères sont plus préférentiellement choisis dans le groupe constitué par les copolymères d'isoprène-butadiène (en abrégé « BIR »), les copolymères d'isoprène-styrène (en abrégé « SIR »), et les copolymères d'isoprène-butadiène-styrène (en abrégé « SBIR »).

Conviennent notamment les copolymères d'isoprène-butadiène et notamment ceux ayant une teneur en isoprène comprise entre 5% et 90% en poids et une Tg allant de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40% en poids, une teneur en isoprène comprise entre 15% et 60% en poids et plus particulièrement entre 20% et 50% en poids, une teneur en butadiène comprise entre 5% et 50% en poids et plus particulièrement comprise entre 20% et 40% en poids, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

De préférence, le deuxième élastomère diénique est un polybutadiène.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, plus particulièrement supérieure à 90%.

De préférence, le deuxième élastomère diénique est un polybutadiène ayant une teneur (% molaire) en cis-1,4 supérieure à 80%, plus particulièrement supérieure à 90% encore, plus particulièrement une teneur (% molaire) supérieure à 95%.

Ces élastomères diéniques peuvent avoir toute microstructure qui est fonction des conditions de polymérisation utilisées, notamment de la présence ou non d'un agent modifiant et/ou randomisant et des quantités d'agent modifiant et/ou randomisant employées.

Ces élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Pour un couplage à du noir de carbone, on peut citer par exemple des groupes fonctionnels comprenant une liaison C-Sn ou des groupes fonctionnels aminés tels que aminobenzophénone par exemple. Pour un couplage à une charge inorganique renforçante telle qu'une silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).

On peut aussi citer comme élastomères fonctionnels ceux préparés par l'utilisation d'un amorceur fonctionnel, notamment ceux portant une fonction amine ou étain (voir par exemple WO 2010/072761).

Comme autres exemples d'élastomères fonctionnalisés, on peut citer également des élastomères (tels que BR, NR ou IR) du type époxydés.

De préférence, le deuxième élastomère diénique est un élastomère diénique non-étendu à l'huile.

### Autres élastomère

Aux élastomères diéniques précédemment décrits peuvent être également associés, en quantité minoritaire, des élastomères synthétiques autres que diéniques, voire des polymères autres que des élastomères, par exemple des polymères thermoplastiques.

### Taux

Le copolymère styrène-butadiène en émulsion (ou un mélange de copolymères styrène-butadiène en émulsion, y compris ses modes préférés) est l'élastomère majoritaire dans la matrice élastomère. Le poids du copolymère styrène-butadiène en émulsion (et ses modes de réalisation préférés) représente plus de 50 % du poids total de la matrice élastomère, de préférence plus de 60 % du poids total de la matrice élastomère.

Préférentiellement, le taux du copolymère styrène-butadiène en émulsion, dans la composition de caoutchouc de la bande de roulement du pneumatique conforme à l'invention peut aller de 51 à 100 pce, de préférence de 60 à 100 pce, de manière encore plus préférée 60 à 85 pce.

Préférentiellement, le taux du deuxième élastomère diénique dans la composition de caoutchouc de la bande de roulement du pneumatique conforme à l'invention peut aller de 0 à 49 pce, de préférence de 0 à 40 pce, de manière encore plus préférée de 15 à 40 pce.

### Charge renforçante

La composition de caoutchouc utilisée dans les pneumatiques de l'invention comporte au moins une charge renforçante comprenant à titre majoritaire une silice, c'est-à-dire que le poids de la silice représente plus de 50 % du poids total de la charge renforçante. De préférence, le poids de la silice représente plus de 60 % du poids total de la charge renforçante, plus préférentiellement plus de 70 %, plus préférentiellement plus de 80 %, plus préférentiellement plus de 90 %, voire éventuellement représente 100 % du poids total de la charge renforçante.

La silice est une charge inorganique renforçante. Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » (« non-black filler ») par opposition au noir de carbone ; cette charge inorganique étant capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique. Une telle charge se caractérise généralement, de manière connue, par la présence de groupes hydroxylcs (-OH) à sa surface, nécessitant pour être utilisée à titre de charge renforçante l'emploi d'un agent ou système de couplage destiné à assurer une liaison chimique stable la charge et la matrice élastomérique.

Comme charges inorganiques renforçantes conviennent notamment des charges minérales de type siliceuses, préférentiellement la silice (SiO₂). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence de 30 à 400 m²/g, notamment entre 60 et 300 m²/g. A titre de silices précipitées hautement dispersibles (dites « HDS »), on citera par exemple les silices « Ultrasil 7000 » et « Ultrasil 7005 » de la société Evonik, les silices Zeosil® 1165 MP et Zeosil® 1115 MP de la société Solvay, la silice Zeosil® Premium 200MP de la société Solvay, la silice Hi-Sil EZ150G de la société PPG, les silices Zeopol 8715, 8745 ou 8755 de la Société Huber, les silices telles que décrites dans les demandes WO03/016215 et WO03/016387.

Bien entendu, on entend également par charge inorganique renforçante des mélanges de différentes charges inorganiques renforçantes, en particulier de silices hautement dispersibles telles que décrites ci-dessus ou un mélange de charges inorganique de type siliceuse et de charges inorganique non siliceuse. A titre de charges inorganiques non siliceuses, on peut citer les charges minérales du type alumineuses, en particulier de l'alumine (Al₂O₃), des oxydes d'aluminium ou des hydroxydes d'aluminium, ou encore des oxydes de titane renforçants, par exemple décrits dans US6610261 et US6747087. Les charges inorganiques non siliceuses, lorsque présentes, sont minoritaires dans la charge renforçante.

L'état physique sous lequel se présente la charge inorganique renforçante est indifférent, que ce soit sous forme de poudre, de microperles, de granulés, ou encore de billes.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et la matrice élastomère. A titre d'exemple, on peut citer par exemple des noirs de carbone pour pneumatiques tels que décrits par exemple dans les documents brevet WO96/37547, WO99/28380.

L'homme du métier saura, à la lumière de la description et des exemples de réalisation qui suivent, ajuster la quantité de charges renforçante en fonction des conditions particulières d'usage de la composition de caoutchouc, notamment en fonction du pneumatique dans lequel elle est destinée à être utilisée.

Préférentiellement, le taux de la charge renforçante, dans la composition de caoutchouc du pneumatique conforme à l'invention peut aller de 55 pce à 200 pce, de préférence de 55 à 150 pce, de manière plus préférée va de 55 à 80 pce. Ces plages préférentielles s'appliquent à l'un quelconque des modes de réalisation de l'invention.

### Les agents de couplage

Pour coupler la charge inorganique renforçante à la matrice élastomérique (c'est-à-dire au copolymère styrène-butadiène en émulsion (ou au mélange de copolymère styrène-butadiène en émulsion) et aux élastomères diéniques lorsqu'ils sont présents), on peut utiliser de manière bien connue un agent de couplage (ou agent de liaison) au moins bifonctionnel destiné à assurer une connexion suffisante, de nature chimique et/ou physique, entre la charge inorganique renforçante (surface de ses particules) et la matrice élastomérique. On peut utiliser en particulier des organosilanes ou des polyorganosiloxanes au moins bifonctionnels.

On peut utiliser notamment des silanes polysulfurés, dits « symétriques » ou « asymétriques » selon leur structure particulière, tels que décrits par exemple dans les demandes WO03/002648 (ou US2005/016651) et WO03/002649 (ou US2005/016650).

Conviennent en particulier, sans que la définition ci-après soit limitative, des silanes polysulfurés répondant à la formule générale (I) suivante:

Z - B - Sx - B - Z (I)

- dans laquelle:
- x est un entier de 2 à 8 (de préférence de 2 à 5) ;
- les symboles B, identiques ou différents, représentent un radical hydrocarboné divalent (de préférence un groupement alkylène en C1-C18 ou un groupement arylène en C6-C12, plus particulièrement un alkylène en C1-C10, notamment en C1-C4, en particulier le propylène);
- les symboles Z, identiques ou différents, répondent à l'une des trois formules (II) ci-après: 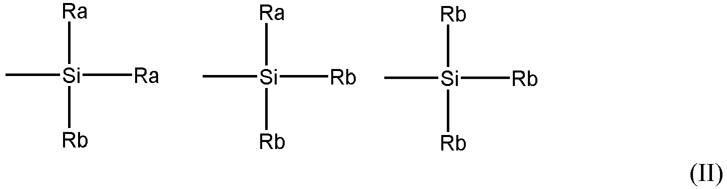
dans lesquelles:
- les radicaux Rₐ, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C1-C4, plus particulièrement le méthyle et/ou l'éthyle).
- les radicaux R_{b}, substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C1-C4, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfurés, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO02/083782 précitée (ou US7217751).

A titre d'exemple d'agents de couplage autres qu'un alkoxysilane polysulfuré, on citera notamment des POS (polyorganosiloxanes) bifonctionnels ou encore des polysulfures d'hydroxysilane (R_{b} = OH dans la formule II ci-dessus) tels que décrits par exemple dans les demandes de brevet WO02/30939 (ou US6774255), WO02/31041 (ou US2004/051210), et WO2007/061550, ou encore des silanes ou POS porteurs de groupements fonctionnels azo-dicarbonyle, tels que décrits par exemple dans les demandes de brevet WO2006/125532, WO2006/125533, WO2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US6849754, WO99/09036, WO2006/023815, WO2007/098080, WO2010/072685 et WO2008/055986.

Bien entendu pourraient être également utilisés des mélanges des agents de couplage précédemment décrits, comme décrit notamment dans la demande WO2006/125534 précitée.

De préférentiellement, l'agent de couplage de la silice avec la matrice élastomère est un alkoxysilane polysulfuré de formule (I) tel que décrit ci-dessus.

La teneur en agent de couplage de la silice avec la matrice élastomère est avantageusement inférieure à 20 pce, étant entendu qu'il est en général souhaitable d'en utiliser le moins possible. Typiquement le taux d'agent de couplage représente de 0,5 % à 15 % en poids par rapport à la quantité de charge inorganique renforçante. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition. Ces plages préférentielles s'appliquent à l'un quelconque des modes de réalisation de l'invention.

### Les agents de recouvrement :

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### Noir de carbone

Selon un mode de réalisation du pneumatique conforme à l'invention, la composition de caoutchouc peut comprendre en outre du noir de carbone.

Le noir de carbone, lorsqu'il est présent, peut être utilisé de préférence à un taux inférieur ou égal à 10 pce, de préférence inférieur ou égal à 5 pce. De préférence, le taux du noir de carbone peut aller de 0,5 à 4 pce. Ces plages préférentielles s'appliquent à l'un quelconque des modes de réalisation de l'invention.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

### Système plastifiant

La composition de caoutchouc de bande de roulement pour les pneumatiques conformes à l'invention comprend de 2 à 17 pce d'un système plastifiant, ce système comprenant de 2 à 15 pce d'au moins une résine plastifiante ayant une température de transition vitreuse Tg supérieure ou égale à 20°C, et de préférence de 0 à 2 pce d'un plastifiant liquide à température ambiante.

De manière connue de l'homme du métier, la dénomination « résine » est réservée dans la présente demande, par définition, à un composé qui est solide à température ambiante (23°C), par opposition à un plastifiant liquide à température ambiante tel qu'une huile.

Les résines plastifiantes sont des polymères bien connus de l'homme du métier. Ce sont des résines hydrocarbonées essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions d'élastomère(s) diénique(s) auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise dans un domaine allant de 30°C à 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, « softening point »). La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique « Waters alliance » selon les conditions suivantes : solvant d'élution : le tétrahydrofurane ; température 35°C ; concentration : 1 g/litre ; débit : 1 ml/min ; volume injecté : 100 µ1 ; étalonnage de Moore avec des étalons de polystyrène ; jeu de 3 colonnes « Waters » en série (« Styragel HR4E », « Styragel HR1 » et « Styragel HR 0.5 ») ; détection par réfractomètre différentiel (par exemple « WATERS 2410 ») pouvant être équipé d'un logiciel d'exploitation (par exemple « Waters Millenium »).

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante peut présenter au moins une quelconque des caractéristiques suivantes :
- une Tg supérieure ou égale à 20°C (en particulier compris dans un domaine allant de 30°C à 100°C), plus préférentiellement supérieure ou égale à 30°C (en particulier dans un domaine allant de 30 C à 95°C);
- un point de ramollissement supérieur ou égal à 40°C (en particulier compris dans un domaine allant de 40°C à 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids et Mn masse molaire moyenne en nombre).

Plus préférentiellement, la résine plastifiante peut présenter l'ensemble des caractéristiques préférentielles ci-dessus.

A titres d'exemples de telles résines plastifiante, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les mélange de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

Parmi les résines de copolymères ci-dessus, on peut citer plus particulièrement celles choisies dans le groupe constitué par les résines de copolymère CPD/ vinylaromatique, les résines de copolymère DCPD/ vinylaromatique, les résines de copolymère CPD/ terpène, les résines de copolymère DCPD/ terpène, les résines de copolymère terpène phénol, les résines de copolymère CPD/ coupe C5, les résines de copolymère DCPD/ coupe C5, les résines de copolymère CPD/ coupe C9, les résines de copolymère DCPD/ coupe C9, les mélange de résines de coupe C5 et de coupe C9, les résines de copolymère terpène/ vinylaromatique, les résines de copolymère terpène/ phénol, les résines de copolymère coupe C5/ vinylaromatique, et les mélanges de ces résines.

Le terme « terpène » regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère CPD, les résines d'homopolymère DCPD, les résines de copolymère CPD/ styrène, les résines de copolymère DCPD/ styrène, les résines de polylimonène, les résines de copolymère limonène/ styrène, les résines de copolymère limonène/CPD, les résines de copolymère limonène/ DCPD, les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac », par Kolon sous dénomination « Hikorez » ou par la société Exxon Mobil sous dénomination « Escorez » pour ce qui concerne les résines coupe C5/ styrène ou résines coupe C5/ coupe C9, ou encore par la société Struktol sous dénomination « 40 MS » ou « 40 NS » (mélanges de résines aromatiques et/ou aliphatiques).

Selon un mode de réalisation de l'invention, le système plastifiant peut comporter d'autre part un plastifiant liquide à température ambiante (à 23°C) présent selon un taux inférieur ou égal à 2 pce.

Toute huile d'extension, qu'elle soit de nature aromatique ou non aromatique, tout plastifiant liquide à température ambiante connu pour ses propriétés plastifiantes vis-à-vis d'élastomères diéniques, peut être utilisable en plus de la résine plastifiante. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme plastifiants liquides à température ambiante, on peut notamment citer les polymères diéniques liquides, les huiles polyoléfiniques, les huiles naphténiques, les huiles paraffiniques, les huiles DAE (Distillate Aromatic Extracts), les huiles MES (Médium Extracted Solvates), les huiles TDAE (Treated Distillate Aromatic Extracts), les huiles RAE (Residual Aromatic Extract oils), les huiles TRAE (Treated Residual Aromatic Extract), les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

De préférence, le plastifiant liquide à température ambiante est choisi dans le groupe constitué par les huiles MES, les huiles TDAE, les huiles naphténiques, les huiles végétales et les mélanges de ces huiles.

Dans un mode de réalisation, la composition de caoutchouc de bande de roulement pour les pneumatiques conformes à l'invention comprend de 2 à 12 pce d'un système plastifiant comprenant de 2 à 10 pce, d'au moins une résine plastifiante ayant une température de transition vitreuse Tg supérieure ou égale à 20°C, et de préférence de 0 à 2 pce d'un plastifiant liquide à température ambiante (23°C). Les caractéristiques préférée de la résine plastifiante telle que décrite ci-dessus et les caractéristiques préférées du plastifiant liquide à température ambiante, lorsqu'il est présent, s'appliquent à ce mode de réalisation.

Dans un autre mode de réalisation, la composition de caoutchouc de bande de roulement pour les pneumatiques conformes à l'invention peut être exempte d'agent plastifiant liquide à température ambiante (23°C). Dans ce cas, la composition de caoutchouc de bande de roulement pour les pneumatiques conformes à l'invention peut comprendre de 2 à 15 pce, de préférence de 2 à 10 pce d'un système plastifiant constitué de d'une résine plastifiante (ou d'un mélange de résines plastifiantes) ayant une température de transition vitreuse Tg supérieure ou égale à 20°C.

De manière surprenante, la combinaison spécifique d'un copolymère styrène-butadiène en émulsion ayant une certaine microstructure, d'une charge renforçante comprenant à titre majoritaire de la silice et d'un système plastifiant à un taux spécifique permet d'obtenir une composition de caoutchouc utilisable dans une bande de roulement pour pneumatique pour les véhicules portant de lourdes charges ayant un bon compromis de performances résistance aux agressions/résistance au roulement/résistance à l'usure.

### Système de réticulation chimique

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris dans un domaine allant de 0,5 à 12 pce, en particulier de 1 à 10 pce. Ces plages préférentielles s'appliquent à l'un quelconque des modes de réalisation de l'invention. L'accélérateur primaire de vulcanisation est utilisé à un taux préférentiel compris dans un domaine allant de 0,5 à 10 pce, plus préférentiellement compris dans un domaine allant de 0,5 à 5,0 pce. Ces plages préférentielles s'appliquent à l'un quelconque des modes de réalisation de l'invention.

Le taux de soufre utilisé dans la composition de caoutchouc de la bande de roulement pour les pneumatiques conformes à l'invention est le plus souvent compris dans un domaine allant de 0,5 à 3,0 pce, celui de l'accélérateur primaire dans un domaine allant de 0,5 à 5,0 pce. Ces plages préférentielles s'appliquent à l'un quelconque des modes de réalisation de l'invention.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé « MBTS »), disulfure de tetrabenzylthiurame (« TBZTD »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI »), dibenzyldithiocarbamate de zinc (« ZBEC ») et les mélanges de ces composés.

### Autres additifs

Les compositions de caoutchouc de bandes de roulement pour les pneumatiques conforme à l'invention telle que décrites précédemment permettent à elles seules de répondre au problème technique posé, en particulier elles permettent d'avoir un bon compromis de performances résistance aux agressions/résistance au roulement/résistance à l'usure.

Toutefois, elles peuvent comprendre également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des agents de protection tels que cires anti-ozone comme par exemple de la paraffine, anti-ozonants chimiques, antioxydants, des agents anti-fatigue, des pigments.

### 2.1.2 - Fabrication de la composition et fabrication de la bande de roulement

La composition de caoutchouc de bande de roulement pour les pneumatiques conformes à l'invention peut être fabriquée dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation.

Le procédé d'obtention de telles compositions comprend par exemple, les étapes suivantes :
(a) malaxer thermomécaniquement (par exemple en une ou plusieurs fois) le copolymère styrène-butadiène en émulsion et éventuellement les autres élastomères présents dans la composition avec la charge renforçante qui est majoritairement de la silice, l'agent de couplage de la silice avec la matrice élastomère, le système plastifiant et le cas échéant le noir de carbone et les autres additifs à l'exception du système de réticulation, jusqu'à atteindre une température maximale comprise dans un domaine allant de 110°C à 190°C (« phase dite non-productive »), ledit copolymère ayant un taux d'unités butadiéniques supérieur ou égal à 50 en poids par rapport au poids total dudit copolymère;
(b) refroidir le mélange obtenu à l'étape précédente à une température inférieure à 100°C ;
(c) incorporer au mélange refroidi un système de réticulation (de préférence de vulcanisation) (« phase dite productive ») ;
(d) malaxer le mélange de l'étape précédente jusqu'à une température maximale inférieure à 110°C.

On peut envisager une ou plusieurs étapes supplémentaires visant à préparer des mélanges maîtres (aussi appelés masterbatches en anglais) d'élastomères (notamment de copolymère styrène-butadiène en émulsion/charges renforçantes destinés à être introduits lors de la première phase dite non-productive en remplacement de la totalité ou en partie de l'élastomère et de la charge introduits séparément. Ces mélanges maîtres peuvent être obtenus en mélangeage masse ou par mélangeage liquide à partir d'un latex de copolymère styrène-butadiène et d'une dispersion aqueuse de ladite charge renforçante.

La composition finale ainsi obtenue peut être ensuite calandrée, par exemple sous la forme d'une feuille ou d'une plaque, notamment pour une caractérisation au laboratoire, ou encore extrudée, pour former par exemple un profilé de caoutchouc utilisé comme bande de roulement d'un pneumatique pour un véhicule portant de lourdes charges, notamment pour un véhicule poids-lourd ou pour un véhicule de génie civil. Le calandrage est un procédé bien connu de l'homme du métier.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### 2.2 - Fabrication du pneumatique conforme à l'invention

Le pneumatique conforme à l'invention est de préférence un pneumatique destiné à équiper un véhicule portant de lourdes de charges, tels que les véhicules poids-lourds, les bus, les véhicules de génie civil. De manière préférentielle, le pneumatique conforme à l'invention est un pneumatique destiné à équiper un véhicule poids-lourd ou un bus.

L'invention concerne les pneumatiques précédemment décrits tant à l'état cru (c'est-à-dire avant cuisson) qu'à l'état cuit (c'est-à-dire après cuisson (ou vulcanisation ou réticulation)).

Le pneumatique peut être fabriqué par toute technique bien connue de l'homme du métier.

### 3 - EXEMPLES

Les caractéristiques précitées de la présente invention, ainsi que d'autres, seront mieux comprises à la lecture de la description suivante de plusieurs exemples de réalisation de l'invention, donnés à titre illustratif et non limitatif.

### 3.1 - Préparation des compositions :

On procède pour les essais qui suivent à la préparation des compositions de la manière suivante: on introduit dans un mélangeur interne, rempli à 70% et dont la température initiale de cuve est d'environ 50°C, les élastomères diéniques (copolymère styrène-butadiène en émulsion, le polybutadiène), la charge renforçante (silice), éventuellement le noir de carbone, l'agent de couplage de la silice avec la matrice élastomère puis, après une à deux minutes de malaxage, les divers autres ingrédients (y compris la résine) à l'exception du système de vulcanisation. On conduit alors un travail thermomécanique (phase non-productive) en une étape (durée totale du malaxage égale à environ 5 min), jusqu'à atteindre une température maximale de « tombée » d'environ 165°C.

On récupère le mélange ainsi obtenu, on le refroidit puis on ajoute le système de vulcanisation (soufre et accélérateur) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après cuisson, soit sous la forme de profilés utilisables directement, après découpage et/ou assemblage aux dimensions souhaitées, par exemple comme bandes de roulement de pneumatiques.

### 3.2 - Essai A :

Le but de cet essai est de démontrer que la composition de caoutchouc C1 conforme à l'invention présente un compris en performances -résistance au roulement, résistance à l'usure et résistance aux agressions - amélioré par rapport aux compositions T0 à T4 non conforme.

Le tableau I présente les formulations des compositions T0 à T4 et C1. Les taux des différents constituants des compositions présentées dans le tableau I sont exprimés en pce. Toutes les compositions (T0 à T4 et C1) comprennent un système de réticulation classiquement utilisé dans la fabrication de bandes de roulement pour pneumatique ; ce système de réticulation comprenant notamment du soufre, du ZnO de l'acide stéarique et un accélérateur.

**Tableau I**

| | **T0** | **T1** | **T2** | **T3** | **T4** | **C1** |
|---|---|---|---|---|---|---|
| **SBR (1)** | (-) | (-) | 80,0 | (-) | 80,0 | (-) |
| **SBR (2)** | 40,0 | 80,0 | (-) | 80,0 | (-) | (-) |
| **SBR (3)** | (-) | (-) | (-) | (-) | (-) | 80,0 |
| **NR (4)** | 40,0 | (-) | (-) | (-) | (-) | (-) |
| **BR (5)** | 20,0 | 20,0 | 20,0 | 20,0 | 20,0 | 20,0 |
| **Silice (6)** | (-) | (-) | (-) | 65,0 | 65,0 | 65,0 |
| **Noir de carbone (7)** | 65,0 | 65,0 | 65,0 | 4,0 | 4,0 | 4,0 |
| **Résine (8)** | 10,0 | 10,0 | 10,0 | 10,0 | 10,0 | 10,0 |
| **Agent de couplage (9)** | (-) | (-) | (-) | 6,5 | 6,5 | 6,5 |
| **DPG (10)** | v | 2,0 | 2,0 | 2,0 | 2,0 | 2,0 |
| **Antioxydant (11)** | 2 | 2,0 | 2,0 | 2,0 | 2,0 | 2,0 |
| **Paraffine** | 1 | 1,0 | 1,0 | 1,0 | 1,0 | 1,0 |

| | | | | | | |
|---|---|---|---|---|---|---|
| (1) Copolymère styrène-butadiène solution SSBR non-fonctionnel, non-étendu à l'huile, non-émulsionné et ayant une Tg = -48°C ; sa microstructure est : 26,5 % en poids d'unités styrène par rapport au poids total du SSBR, 24 % en poids d'unités butadiényl 1,2-vinyl ; 26 % en poids d'unités butadiényl 1,4-cis et 50 % en poids d'unités butadiényl 1,4-trans (chacun de ces trois derniers taux se rapporte aux unités butadiéniques) ; (2) Copolymère styrène-butadiène solution SSBR fonctionnalisé étain, non-étendu à l'huile, non-émulsionné et ayant une Tg = -65°C ; sa microstructure est : 15,5 % en poids d'unités styrène par rapport au poids total du SSBR, 24 % en poids d'unités butadiényl 1,2-vinyl ; 28 % en poids d'unités butadiényl 1,4-cis et 48 % en poids d'unités butadiényl 1,4-trans (chacun de ces trois derniers taux se rapporte aux unités butadiéniques) ; (3) Copolymère styrène-butadiène en émulsion ESBR, non-fonctionnel, non-étendu à l'huile et ayant une Tg = -52°C ; sa microstructure est : 23 % en poids d'unités styrène par rapport au poids total du ESBR; 15 % en poids d'unités butadiényl 1,2-vinyl, 15 % en poids d'unités butadiényl 1,4-cis et 70 % en poids butadiényl 1,4-trans (chacun de ces trois derniers taux se rapporte aux unités butadiéniques) ; (4) Caoutchouc naturel ; (5) Polybutadiène Néodyme avec 98% de motifs 1,4-cis butadiène et une Tg = 108°C ; (6) Silice « Zeosil 1165 MP » type « HDS » de la société Solvay ; (7) Noir de carbone N134 ; (8) Résine coupe C5/C9 commercialisée par la société Cray Valley sous la dénomination « Résine THER 8644 » (Tg = 44°C) ; (9) Agent de couplage : TESPT (« Si69 » de la société Evonik - Degussa) ; (10) Diphénylguanidine (« Perkacit » DPG de la société Flexsys) ; (11) N-1,3-diméthylbutyl-N-phényl-para-phénylènediamine commercialisée par la société Flexsys sous la dénomination "Santoflex 6-PPD". | | | | | | |

La microstructure et la température de transition vitreuse Tg des élastomères sont notamment déterminées selon les méthodes de mesure décrites ci-dessus

La composition T0 est une composition témoin classiquement utilisée et commercialisée pour la fabrication de bande de roulement de pneumatiques destinés à équiper des véhicules portant de lourdes charges. Elle représente donc un compris en performances -résistance au roulement, résistance à l'usure et résistance aux agressions - pour des pneumatiques qui sont commercialisés.

La composition T1 diffère de la composition T0 par la nature de la matrice élastomérique. La quantité de copolymère styrène-butadiène en solution (SSBR) ayant une température de transition vitreuse égale à -65°C a été augmentée. Ce copolymère est le copolymère majoritaire dans la composition T1. La charge renforçante majoritaire est du noir de carbone.

La composition T2 diffère de la composition T1 par la nature du copolymère styrène-butadiène en solution (SSBR). Le SSBR utilisée dans la composition T2 présente une température de transition vitreuse plus élevée que celle du copolymère SSBR de la composition Tl.

La composition T3 diffère de la composition Tl par la nature de la charge renforçante. La charge renforçante noir de carbone de la composition T1 a été remplacée par une charge inorganique renforçante: de la silice. Le taux de charge renforçante est sensiblement équivalent.

La composition T4 diffère de la composition T3 par la nature du copolymère styrène-butadiène en solution (SSBR). Le copolymère SSBR utilisée dans la composition T3 présente une température de transition vitreuse plus élevée que celle du copolymère SSBR de la composition T3.

La composition C1, selon l'invention, diffère de la composition T4 par la nature du copolymère styrène-butadiène. Le copolymère styrène-butadiène en solution (SSBR) de la composition T4 a été remplacé par un copolymère styrène-butadiène en solution en émulsion (ESBR) d'une température de transition vitreuse très proche.

Les propriétés mesurées après cuisson à 150°C pendant 45 min sont reportées dans le tableau II.

**Tableau 2**

| | **T0** | **T1** | **T2** | **T3** | **T4** | **C1** |
|---|---|---|---|---|---|---|
| **Allongement à la rupture (%)** | 100 | 68 | 77 | 74 | 80 | 90 |
| **Déchirabilité- Energie rupture** | 100 | 86 | 75 | 62 | 129 | 171 |
| **G*50% (MPa)** | 100 | 122 | 112 | 133 | 118 | 115 |
| **tan(δ)max** | 100 | 108 | 116 | 87 | 90 | 100 |

Bien que certaines de ses propriétés soient améliorées (par rapport à la composition T0), la composition T1 présente des propriétés d'hystérèse qui ne sont pas acceptables. Le compromis de performance n'est donc pas obtenu avec cette composition. Le même constat est effectué avec la composition T2. La composition T3 présente une amélioration des propriétés d'hystérèse mais au détriment de ses propriétés limites qui sont dégradées de manière trop importante. Le compromis de performances n'est également pas obtenu avec la composition T3.

La composition T4 hors invention présente une amélioration des propriétés de rigidité, d'hystérèses et de propriétés limites par rapport aux compositions T2 et T3 hors invention.

De manière surprenante, la composition C1 conforme à l'invention présente une amélioration des propriétés limites par rapport à celles de la composition T4 pour une rigidité équivalente à celle de la composition T4. Les propriétés hystérétiques de la composition C1 sont légèrement diminuées par rapport à celle de la composition T4. On notera que cette baisse des propriétés hystérétiques n'est pas incompatible avec une utilisation pour un pneumatique portant de lourdes charges. En effet, ces propriétés hystérétique sont du même ordre de grandeur que celle de la composition commerciale T0.

Cette amélioration des propriétés limites tout en conservant un bon niveau de rigidité et d'hystérèse est d'autant plus surprenante, qu'il apparait clairement au vu des compositions témoins T2 et T3 que l'utilisation d'un SSBR ayant une température de transition vitreuse élevée et que l'utilisation de silice à titre de charge renforçante majoritaire impactent de manière négative les propriétés de ces compositions. On n'aurait donc pas combiné un ESBR ayant une température de transition vitreuse élevée avec une charge renforçante majoritairement siliceuse dans le but d'améliorer le compromis de performances. Or, de façon surprenante, on constate que la combinaison d'un ESBR ayant une température de transition vitreuse élevée avec une charge siliceuse permet d'améliorer les propriétés limites sans dégrader les autres performances de rigidité et d'hystérèse. L'amélioration des propriétés mécaniques traduite par le gain en rigidité est favorable en matière de résistance à l'usure d'un pneumatique muni d'une bande de roulement constituée par une telle composition.

L'amélioration des propriétés hystérétiques est favorable pour diminuer la résistance au roulement d'un pneumatique muni d'une bande de roulement constituée par une telle composition.

L'amélioration des propriétés limites (déchirabilité et allongement à la rupture) est favorable en matière de résistance aux agressions d'un pneumatique muni d'une bande de roulement constituée par une telle composition.

En conclusion, ces résultats montrent que la combinaison spécifique d'un copolymère styrène-butadiène en émulsion ayant une certaine microstructure comme étant le copolymère majoritaire dans la matrice élastomère avec une charge renforçante majoritaire qui est une silice permet, de manière surprenante, d'obtenir des propriété de rigidité, des propriétés limites et de propriétés d'hystérèse comparables, voire améliorées, par rapport à une composition témoin classiquement utilisée pour la fabrication de bande de roulement pour pneumatiques destinés à équiper des véhicules porteurs de lourdes charges.

## Revendications

1. Pneumatique destiné à équiper un véhicule portant de lourdes charges dont la bande de roulement comprend une composition de caoutchouc à base d'au moins:
- une matrice élastomère comprenant à titre majoritaire un copolymère styrène-butadiène en émulsion, ledit copolymère ayant un taux d'unités butadiéniques supérieur ou égal à 50 % en poids par rapport au poids total dudit copolymère, de préférence dans un domaine allant de 55 à 80 % en poids par rapport au poids total dudit copolymère,
- une charge renforçante comprenant à titre majoritaire de la silice,
- un système de réticulation chimique,
- un agent de couplage de la silice avec la matrice élastomère, et
- un système plastifiant comprenant de 2 à 15 pce, de préférence de 2 à 10 pce, d'au moins une résine plastifiante ayant une température de transition vitreuse Tg supérieure ou égale à 20°C, et dont le taux total du système plastifiant dans la composition est compris dans un domaine allant de 2 à 17 pce, de préférence de 2 à 12 pce.

2. Pneumatique selon la revendication 1, dans lequel le copolymère styrène-butadiène en émulsion présente un taux d'unités styréniques inférieur ou égal à 50% en poids par rapport au poids total dudit copolymère, de préférence compris dans un domaine allant de 20 à 45% en poids par rapport au poids total dudit copolymère.

3. Pneumatique selon la revendication 1 ou 2, dans lequel le copolymère styrène-butadiène en émulsion présente un taux d'unités butadiènyl 1,4-trans supérieur ou égal à 50 % en poids par rapport au poids total des unités butadiéniques.

4. Pneumatique selon l'une quelconque des revendications 1 à 3, dans lequel le copolymère styrène-butadiène a une température de transition vitreuse comprise dans un domaine allant de -65°C et -30°C.

5. Pneumatique selon l'une quelconque des revendications 1 à 4, dans lequel le copolymère styrène-butadiène en émulsion est un copolymère styrène-butadiène en émulsion non-étendu à l'huile.

6. Pneumatique selon l'une quelconque des revendications 1 à 5, dans lequel le copolymère styrène-butadiène en émulsion est un copolymère styrène-butadiène en émulsion non-fonctionnalisé.

7. Pneumatique selon l'une quelconque des revendications 1 à 6, dans lequel la matrice élastomère comprend en outre au moins un deuxième élastomère diénique différent d'un copolymère styrène-butadiène.

8. Pneumatique selon l'une quelconque des revendications 1 à 7, dans lequel la composition comprend en outre du noir de carbone.

9. Pneumatique selon la revendication 8, dans lequel le taux de noir de carbone est inférieur ou égal à 10 pce, inférieur ou égal à 5 pce, de préférence le taux de noir de carbone est compris dans un domaine allant de 0,5 à 4 pce.

10. Pneumatique selon l'une quelconque des revendications 1 à 9, dans lequel le taux de la charge renforçante est compris dans un domaine allant de 55 à 200 pce, de préférence de 55 à 150 pce, de manière plus préférée de 55 à 80 pce.

11. Pneumatique selon l'une quelconque des revendications 1 à 10, dans lequel la résine plastifiante a une température de transition vitreuse Tg supérieure ou égale à 30°C, de préférence comprise dans un domine allant de à 30 à 100°C.

12. Pneumatique selon l'une quelconque des revendications 1 à 11, dans lequel la résine plastifiante est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les mélanges de résines d'homopolymère ou copolymère de coupe C5 et de résines d'homopolymère ou copolymère de coupe C9, les résines d'homopolymère ou copolymère d'alpha-méthyl-styrène et les mélanges de ces résines.

13. Pneumatique selon l'une quelconque des revendications 1 à 12, dans lequel le système plastifiant comprend de 0 à 2 pce d'au moins un agent plastifiant liquide à température ambiante.

14. Pneumatique selon l'une quelconque des revendications 1 à 13, dans lequel la composition est exempte d'agent plastifiant liquide à température ambiante.

15. Pneumatique selon l'une quelconque des revendications 1 à 14, **caractérisé en ce qu'**il est destiné à équiper un véhicule poids-lourd.

## Patentansprüche

1. Reifen zur Ausstattung eines schweren Lasten tragenden Fahrzeugs, dessen Lauffläche eine Kautschukzusammensetzung auf Basis von mindestens
- einer Elastomermatrix, die hauptsächlich ein Styrol-Butadien-Emulsionscopolymer umfasst, wobei das Copolymer einen Gehalt an Butadien-Einheiten von 50 Gew.-% oder mehr, bezogen auf das Gesamtgewicht des Copolymers, vorzugsweise in einem Bereich von 55 bis 80 Gew.-%, bezogen auf das Gesamtgewicht des Copolymers, aufweist,
- einem verstärkenden Füllstoff, der hauptsächlich Kieselsäure umfasst,
- einem chemischen Vernetzungssystem,
- einem Mittel zum Kuppeln der Kieselsäure mit der Elastomermatrix und
- ein Weichmachersystem, umfassend 2 bis 15 phe, vorzugsweise 2 bis 10 phe, mindestens eines Weichmacherharzes mit einer Glasübergangstemperatur Tg von 20 °C oder mehr, wobei der Gesamtgehalt des Weichmachersystems in der Zusammensetzung in einem Bereich von 2 bis 17 phe, vorzugsweise von 2 bis 12 phe, liegt,
umfasst.

2. Reifen nach Anspruch 1, wobei das Styrol-Butadien-Emulsionscopolymer einen Gehalt an Styrol-Einheiten von 50 Gew.-% oder weniger, bezogen auf das Gesamtgewicht des Copolymers, vorzugsweise in einem Bereich von 20 bis 45 Gew.-%, bezogen auf das Gesamtgewicht des Copolymers, aufweist.

3. Reifen nach Anspruch 1 oder 2, wobei das Styrol-Butadien-Emulsionscopolymer einen Gehalt an trans-1,4-Butadienyl-Einheiten von 50 Gew.-% oder mehr, bezogen auf das Gesamtgewicht der Butadien-Einheiten, aufweist.

4. Reifen nach einem der Ansprüche 1 bis 3, wobei das Styrol-Butadien-Emulsionscopolymer eine Glasübergangstemperatur in einem Bereich von -65 °C und -30 °C aufweist.

5. Reifen nach einem der Ansprüche 1 bis 4, wobei es sich bei dem Styrol-Butadien-Emulsionscopolymer um ein nicht mit Öl gestrecktes Styrol-Butadien-Emulsionscopolymer handelt.

6. Reifen nach einem der Ansprüche 1 bis 5, wobei es sich bei dem Styrol-Butadien-Emulsionscopolymer um ein nicht funktionalisiertes Styrol-Butadien-Emulsionscopolymer handelt.

7. Reifen nach einem der Ansprüche 1 bis 6, wobei die Elastomermatrix außerdem mindestens ein zweites Dienelastomer, das von einem Styrol-Butadien-Copolymer verschieden ist, umfasst.

8. Reifen nach einem der Ansprüche 1 bis 7, wobei die Zusammensetzung außerdem Ruß umfasst.

9. Reifen nach Anspruch 8, wobei der Rußgehalt 10 phe oder weniger beträgt, 5 phe oder weniger beträgt und der Rußgehalt vorzugsweise in einem Bereich von 0,5 bis 4 phe liegt.

10. Reifen nach einem der Ansprüche 1 bis 9, wobei der Gehalt des verstärkenden Füllstoffs in einem Bereich von 55 bis 200 phe, vorzugsweise 55 bis 150 phe, weiter bevorzugt 55 bis 80 phe, liegt.

11. Reifen nach einem der Ansprüche 1 bis 10, wobei das Weichmacherharz eine Glasübergangstemperatur Tg von 30 °C oder mehr und vorzugsweise in einem Bereich von 30 °C bis 100 °C aufweist.

12. Reifen nach einem der Ansprüche 1 bis 11, wobei das Weichmacherharz aus der Gruppe bestehend aus Cyclopentadien-Homopolymer- oder -Copolymerharzen, Dicyclopentadien-Homopolymer- oder -Copolymerharzen, Terpen-Homopolymer- oder -Copolymerharzen, C5-Schnitt-Homopolymer- oder -Copolymerharzen, C9-Schnitt-Homopolymer- oder -Copolymerharzen, Mischungen von C5-Schnitt-Homopolymer- oder -Copolymerharzen und C9-Schnitt-Homopolymer- oder -Copolymerharzen, alpha-Methylstyrol-Homopolymer- oder -Copolymerharzen und Mischungen dieser Harze ausgewählt ist.

13. Reifen nach einem der Ansprüche 1 bis 12, wobei das Weichmachersystem 0 bis 2 phe mindestens eines bei Umgebungstemperatur flüssigen Weichmachers umfasst.

14. Reifen nach einem der Ansprüche 1 bis 13, wobei die Zusammensetzung keinen bei Umgebungstemperatur flüssigen Weichmacher enthält.

15. Reifen nach einem der Ansprüche 1 bis 14, **dadurch gekennzeichnet, dass** er zur Ausstattung eines Schwerlastfahrzeugs vorgesehen ist.

## Claims

1. Tyre intended to equip a vehicle carrying heavy loads, the tread of which comprises a rubber composition based on at least:
- an elastomer matrix comprising predominantly a styrene-butadiene emulsion copolymer, said copolymer having a content of butadiene units of greater than or equal to 50% by weight relative to the total weight of said copolymer, preferably in a range extending from 55 to 80% by weight relative to the total weight of said copolymer,
- a reinforcing filler comprising predominantly silica,
- a chemical crosslinking system,
- an agent for coupling the silica with the elastomer matrix, and
- a plasticizing system comprising from 2 to 15 phr, preferably from 2 to 10 phr, of at least one plasticizing resin having a glass transition temperature Tg of greater than or equal to 20°C, and the total content of the plasticizing system of which in the composition is within a range extending from 2 to 17 phr, preferably from 2 to 12 phr.

2. Tyre according to Claim 1, in which the styrene-butadiene emulsion copolymer has a content of styrene units of greater than or equal to 50% by weight relative to the total weight of said copolymer, preferably within a range extending from 20 to 45% by weight relative to the total weight of said copolymer.

3. Tyre according to Claim 1 or 2, in which the styrene/butadiene emulsion copolymer has a content of 1,4-trans butadienyl units of greater than or equal to 50% by weight relative to the total weight of the butadiene units.

4. Tyre according to any one of Claims 1 to 3, in which the styrene/butadiene copolymer has a glass transition temperature within a range extending from -65°C and -30°C.

5. Tyre according to any one of Claims 1 to 4, in which the styrene/butadiene emulsion copolymer is a non-oil-extended styrene/butadiene emulsion copolymer.

6. Tyre according to any one of Claims 1 to 5, in which the styrene/butadiene emulsion copolymer is a non-functionalized styrene/butadiene emulsion copolymer.

7. Tyre according to any one of Claims 1 to 6, in which the elastomer matrix also comprises at least a second diene elastomer different from a styrene/- butadiene copolymer.

8. Tyre according to any one of Claims 1 to 7, in which the composition also comprises carbon black.

9. Tyre according to Claim 8, in which the content of carbon black is less than or equal to 10 phr, less than or equal to 5 phr; preferably, the content of carbon black is within a range extending from 0.5 to 4 phr.

10. Tyre according to any one of Claims 1 to 9, in which the content of the reinforcing filler is in the range extending from 55 to 200 phr, preferably from 55 to 150 phr, more preferably from 55 to 80 phr.

11. Tyre according to any one of Claims 1 to 10, in which the plasticizing resin has a glass transition temperature Tg of greater than or equal to 30°C, preferably within a range extending from 30 to 100°C.

12. Tyre according to any one of Claims 1 to 11, in which the plasticizing resin is selected from the group consisting of cyclopentadiene homopolymer or copolymer resins, dicyclopentadiene homopolymer or copolymer resins, terpene homopolymer or copolymer resins, C5-fraction homopolymer or copolymer resins, C9-fraction homopolymer or copolymer resins, mixtures of C5-fraction homopolymer or copolymer resins, and of C9-fraction homopolymer or copolymer resins, alpha-methylstyrene homopolymer or copolymer resins, and mixtures of these resins.

13. Tyre according to any one of Claims 1 to 12, in which the plasticizing system comprises from 0 to 2 phr of at least one plasticizing agent that is liquid at ambient temperature.

14. Tyre according to any one of Claims 1 to 13, in which the composition is free of plasticizing agent that is liquid at ambient temperature.

15. Tyre according to any one of Claims 1 to 14, **characterized in that** it is intended to equip a heavy-duty vehicle.
